# EUROPEAN PATENT SPECIFICATION

(11) **EP 3 905 463 B1**
(45) Date of publication and mention of the grant of the patent: **22.02.2023**
(21) Application number: 21169321.3
(22) Date of filing: 20.04.2021
(51) Int. Cl.: H02G 7/02, H02G 7/04, H02G 7/16, H02G 7/18, H02G 7/05

(54) **EXTENDABLE TENSIONING DEVICE, IN PARTICULAR FOR PROTECTING OVERHEAD POWER LINES**
AUSZIEHBARE SPANNVORRICHTUNG, INSBESONDERE ZUM SCHUTZ VON FREIEN STROMLEITUNGEN
DISPOSITIF DE TENSION EXTENSIBLE, NOTAMMENT POUR LA PROTECTION DES LIGNES AERIENNES

(30) Priority: 20.04.2020 IT 202000008344
(43) Date of publication of application: 03.11.2021
(73) Proprietor: Tenesa S.r.l., 14050 Moasca (Asti) (IT)
(72) Inventor: JOVANOV, Daniel, I-14050 MOASCA (Asti) (IT)
(74) Representative: Savoca, Agatino

(56) References cited:
- EP-A1- 0 599 780
- CN-A- 109 004 607
- DE-A1- 2 408 851
- KR-B1- 101 759 987
- US-A- 4 195 192

## Description

### Technical field

The present invention is placed, in general, in the field of protection systems (especially for electric lines); in particular, the invention refers to an extensible tensioning device, applicable in particular in the structural protection of power lines.

### Summary of invention

It is known that the electrical cables of an overhead line may bear an excessive weight, due for example to ice or snow that may deposit there, which may involve the risk of a detachment of the cable from the support and/or the collapse of the support structure.

There is envisaged in the prior art a power line protection system comprising an extensible tensioning device including a tubular body connectable at one end to a support pole of an overhead power line, in this tubular body a disc being rotatably slidable, connectable to an overhead power line cable.

The sliding of the disc inside the tubular body, due to traction exerted on the cable, allows said cable to flex and twist under the weight of the snow or ice, without causing the support to fail, until the snow falls, and the cable is lightened. Thus, once the extra weight is removed, an elastic means causes the rod to re-enter the cylindrical body, and the cable is returned to its initial condition.

A solution of the aforesaid type is known from document CN 109 004 607 A.

In contrast to the prior art, a protection device according to the present invention comprises, in place of the disc, a piston sliding within the tubular body, and an annular element, coaxial with respect to the piston rod and radially interposed between this rod and the outer cylindrical body.

The rod is slidably housed in the annular element, which is engaged on one side by one end of a first elastic means (the opposite end of which abuts against an end wall of the external cylindrical body), and on the other side by one end of a second elastic means (the opposite end of which abuts against a projection integral with the rod).

The annular element houses at least one hook, integral with the annular element and radially movable, against the action of a secondary elastic means, between an engaged condition with a corresponding recess on the rod (condition wherein the rod is not free to slide with respect to the annular element), and a disengaged condition from the recess (wherein the rod is free to slide with respect to the annular element).

The present description of the invention will focus on the application to a power line, but other contexts are not excluded.

In effect, in general, an extensible tensioning device according to the invention lends itself to applications in a variety of fields, and in general (due to its flexibility) such a device may be employed when it is desired to connect two fixed points, two moving points or a fixed point and a moving point together, with fixed and/or variable tensioning by means of a rope, cord, chain or other means, so as to protect the connected structures from tearing, pulling and breaking, and to transform the tensioning of the rigid connection into a flexible and separable one when necessary.

An example of a connection between two fixed points is poles and pylons for the distribution of electricity, telecommunications, etc., as described above.

In any case, a protection system according to the invention may be used, for example, also in cable transport systems or another similar connection.

An example of a connection between two moving points occurs when it is necessary to connect two aircraft in flight by means of refueling hoses, or two ships in rough seas that need to transship goods and people, for example in cases of emergency.

An example of one fixed point and another moving point is a boat moored in a harbor with strong winds and high waves, or the sail of a boat tied to the hull, etc.

With a protection device according to the invention, a connection with controlled stiffness is obtained between the parts, reducing or avoiding the risks and damages derived from fixed connections, when they are compromised for any reason.

The aforesaid and other objects and advantages are achieved, according to an aspect of the invention, by a protection device having the features defined in claim 1. Preferred embodiments of the invention are defined in the dependent claims.

### Brief description of the drawings

The functional and structural features of some preferred embodiments of a protection device for power lines according to the invention will now be described. Reference is made to the appended drawings, wherein:

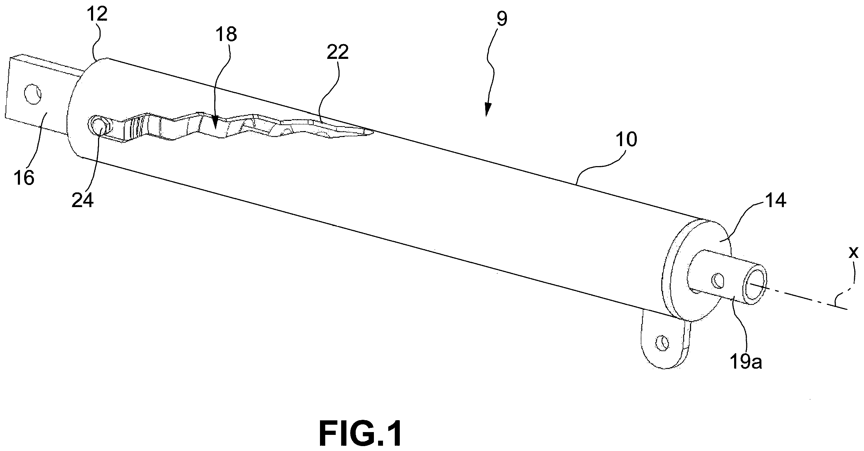

- Fig. 1 is a schematic perspective view of an extensible tensioning device, according to an embodiment of the invention;

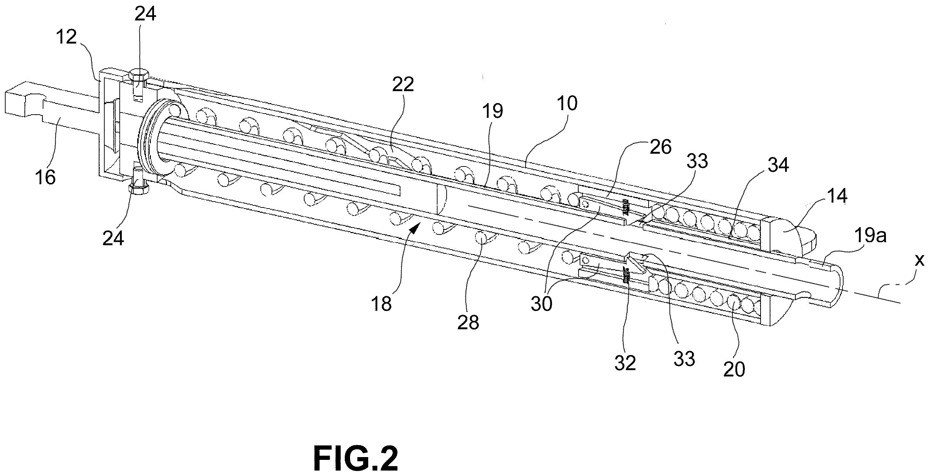

- Fig. 2 is a schematic view in longitudinal cross section of the extensible tensioning device of Fig. 1;

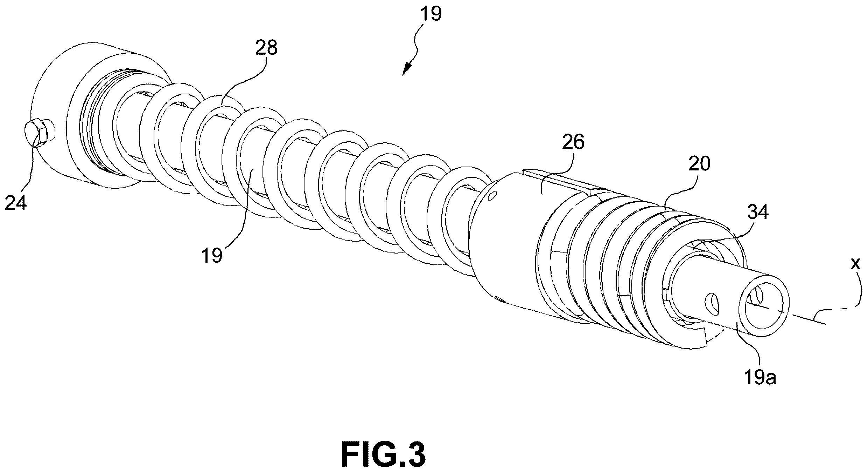

- Fig. 3 is a schematic perspective view of the components inside the tubular casing of the extensible tensioning device of Fig. 1 and 2, in assembled configuration;

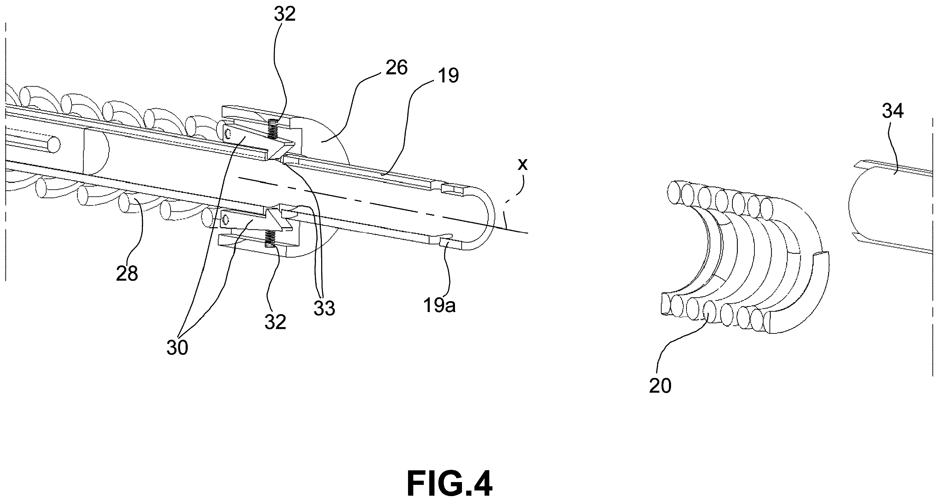

- Fig. 4 is a partially exploded schematic perspective view of the components of the extensible tensioning device of Fig. 3; and

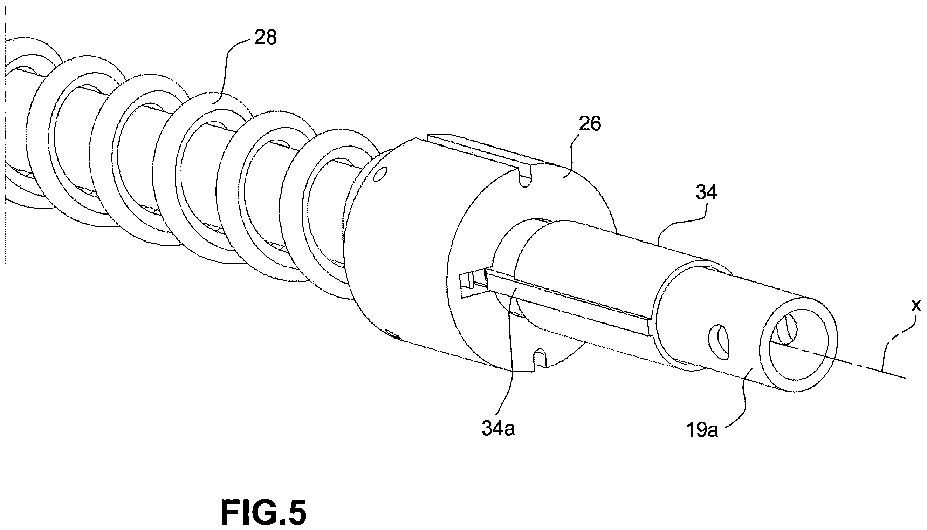

- Fig. 5 is a schematic perspective view of some components of the extensible tensioning device of Fig. 3, in a rest condition.

### Detailed description

Before describing a plurality of embodiments of the invention in detail, it should be clarified that the invention is not limited in its application to the construction details and configuration of the components presented in the following description or illustrated in the drawings. The invention is capable of assuming other embodiments and of being implemented or constructed in practice in different ways. It should also be understood that the phraseology and terminology have a descriptive purpose and should not be construed as limiting.

Referring by way of example to the figures, an extensible tensioning device 9, in particular for the protection of power lines, comprises an external cylindrical body 10, extended along a longitudinal direction x and delimited at the ends by a pair of facing end walls 12, 14; a coupling element 16, integral with a first end wall 12 and adapted to connect the external cylindrical body 10 to a support (for example, a pole or pylon supporting the electric line); a piston 18, slidably housed inside the external cylindrical body 10 and comprising a rod 19 sliding within a hole passing through a second end wall 14, said piston 18 being rotatably translatable between a first retracted position, wherein the rod 19 is in a maximally retracted configuration inside the outer cylindrical body 10 and in a first angular position with respect thereto, and a second extended position, wherein the rod 19 is in a maximally extended configuration outside the external cylindrical body 10 and in a second angular position rotated with respect to the first angular position, said rod 19 having a connecting end 19a projecting externally from the second end wall 14, said connecting end 19a being adapted to connect a flexible cable to the device 9; and a first elastic means 20, housed inside the external cylindrical body 10 and adapted to bias the piston 18 toward said first retracted position.

The extensible tensioning device 9 further comprises a second elastic means 28 and an annular element 26, axially interposed between the first elastic means 20 and said second elastic means 28.

The annular element 26 is coaxial with respect to the rod 19 of the piston 18 and radially interposed between said rod 19 and the external cylindrical body 10, the rod 19 being slidably accommodated in said annular element 26, this annular element 26 being engaged on one side by one end of the first elastic means 20 (the opposite end of said first elastic means 20 being in abutment against the second end wall 14 of the external cylindrical body 10), and on the other side by one end of the second elastic means 28 (the opposite end of said second elastic means 28 being in abutment against the projection integral with the rod 19).

The annular element 26 houses at least one hook 30, integral with the annular element 26 and radially movable (against the action of a secondary elastic means 32) between an engaged condition with a corresponding recess 33 on the rod 19, wherein the rod 19 is not free to slide with respect to the annular element 26, and a disengaged condition from the recess 33, wherein the rod 19 is free to slide with respect to the annular element 26.

In this way, in a first step of increasing the load on the flexible cable, the rod 19 tends to extend outside the external cylindrical body 10, translating integrally with the annular element 26 (as long as the engaged condition with the recess 33 by the hook 30 lasts), against the force of the elastic means 20, 28 (above all, of the first elastic means 20), which will tend to push the annular element 26 in the opposite direction.

Since the annular element 26 is located in an intermediate position between the two elastic means 20, 28, and acts as a shoulder for both, the two elastic means 20, 28 will be arranged in parallel with each other.

Once a predetermined traction value is exceeded, exerted by the flexible cable on the piston 18, the hook 30 disengages from the recess 33, releasing the rod 19 from the annular element 26; in this condition, the annular element 26 will act as a floating shoulder for both elastic means 20, 28. Assuming that the first elastic means 20 has become compacted, the second elastic means 28 will continue to deform (in the example illustrated, compressing against the annular element 26).

Preferably, the first elastic means 20 has a higher stiffness than the stiffness of the second elastic means 28.

According to an embodiment, the external cylindrical body 10 has at least one seat 22, extending between two ends mutually spaced longitudinally and circumferentially along the outer surface of the external cylindrical body 10, said device 9 further comprising a pin 24, projecting transversely from the piston 18 and movable integrally with said piston, said pin 24 being slidably accommodated in said seat 22 between a first position proximal to a first end of the seat 22, wherein the piston 18 is in its first retracted position, and a second position distal from said first end of the seat 22, wherein the piston 18 is in its second extended position.

Expediently, the seat 22 is a slot passing through the thickness of the external cylindrical body 10, into which the pin 24 slides into place.

According to an embodiment, the seat 22 is shaped in a stepped pattern.

According to an embodiment, the first elastic means 20 engages the second end wall 14 at one end, and at the opposite end a projection integral with the rod 19 (expediently, an annular crown of the head of the piston 18, proximal to the first end 12); in this way, the first elastic means 20 opposes the exit of the rod 19 from the external cylindrical body 10, biasing this rod 19 toward the first retracted position.

According to an embodiment, the extensible tensioning device 9 comprises a radial shim 34, slidably fitted on the rod 19 in an axially interposed position between the second end wall 14 of the external cylindrical body 10 and the annular element 26, said radial shim 34 presenting radial thickenings 34a adapted to engage the hook 30 to radially lift said hook from the engaged condition with the corresponding recess 33 on the rod 19 to the disengaged condition from the recess 33. These radial thickenings 34a are expediently configured in the manner of ramps of increasing thickness in the direction of the second end wall 14, whereby the hook 30, passing over it, rises up to disengage from the recess 33, thus separating the annular element 26 from the rod 19.

In this way, as the traction force exerted by the flexible cable on the rod 19 increases, said rod will translate out of the external cylindrical body 10, pulling the annular element 26, which carries the hook 30. Consequently, the hook 30 will slide on the radial thickenings 34a, from which it will be forced to uncouple from the recess 33. Expediently, the hook 33 will have an attachment portion, facing the radial shim 34, of a shape complementary to the attachment portion of the corresponding radial thickening 34a, so as to facilitate the sliding of the hook 33 on the radial thickening 34a.

Various aspects and embodiments of a protection device according to the invention have been described. It is understood that each embodiment may be combined with any other embodiment. Furthermore, the invention is not limited to the described embodiments, but may be varied within the scope defined by the appended claims.

## Claims

1. An extensible tensioning device (9), in particular for the protection of overhead power lines, comprising:
- an external cylindrical body (10), extended along a longitudinal direction (x) and delimited at the ends by a pair of end walls (12, 14) facing each other;
- a coupling element (16), integral with a first end wall (12) and adapted to connect the external cylindrical body (10) to a support;
- a piston (18), slidably housed inside the external cylindrical body (10) and comprising a rod (19) slidable within a hole passing through a second end wall (14), said piston (18) being rotatably translatable between a first retracted position, wherein the rod (19) is in a configuration which is maximally retracted inside the external cylindrical body (10) and in a first angular position with respect thereto, and a second extended position, wherein the rod (19) is in a configuration which is maximally extended outside the external cylindrical body (10) and in a second angular position rotated with respect to the first angular position, said rod (19) having a connection end (19a) protruding externally to the second end wall (14), said connection end (19a) being adapted to connect a flexible cable to the extensible tensioning device (9); and
- a first elastic means (20), housed inside the external cylindrical body (10) and adapted to bias the piston (18) toward said first retracted position,
**characterized in that** it comprises an annular element (26) coaxial with respect to the rod (19) of the piston (18) and radially interposed between said rod (19) and the external cylindrical body (10), the rod (19) being slidably received in said annular element (26), said annular element (26) is engaged on one side by one end of the first elastic means (20), the opposite end of said first elastic means (20) being in abutment against the second end wall (14) of the external cylindrical body (10), and on the other side by one end of a second elastic means (28), the opposite end of said second elastic means (28) being in abutment against a projection integral with the rod (19), said annular element (26) housing at least one hook (30), integral with the annular element (26) and radially movable, against the action of a secondary elastic means (32), between an engaged condition with a corresponding recess (33) on the rod (19), wherein the rod (19) is not free to slide with respect to the annular element (26), and a disengaged condition from the recess (33), wherein the rod (19) is free to slide with respect to the annular element (26).

2. The device according to claim 1, wherein the external cylindrical body (10) has at least one seat (22), extended between two ends mutually spaced longitudinally and circumferentially along the external surface of the external cylindrical body (10), said device (9) further comprising a pin (24), protruding transversely from the piston (18) and movable integrally with the said piston, said pin (24) is slidably housed in said seat (22) between a first position proximal to a first end of the seat (22), wherein the piston (18) is in its first retracted position, and a second position distal from said first end of the seat (22), wherein the piston (18) is in its second extended position.

3. The device according to claim 2, wherein the seat (22) is a slot passing through the thickness of the external cylindrical body (10), in which the pin (24) is inserted slidably.

4. The device according to claim 2 or 3, wherein the seat (22) is shaped in a stepped pattern.

5. The device according to any of the preceding claims, wherein the first elastic means (20) has a higher stiffness than the stiffness of the second elastic means (28).

6. The device according to any of the preceding claims, comprising a radial shim (34), slidably fitted on the rod (19) in an axially interposed position between the second end wall (14) of the external cylindrical body (10) and the annular element (26), said radial shim (34) having radial thickenings (34a) suitable for engaging the hook (30) to lift said hook from the engaged condition of the corresponding recess (33) on the rod (19) to the disengaged condition from the recess (33).

## Patentansprüche

1. Ausziehbare Spannvorrichtung (9), insbesondere für den Schutz von Freileitungen, aufweisend:
- einen äußeren zylindrischen Körper (10), der sich entlang einer Längsrichtung (x) erstreckt und an den Enden durch ein Paar einander zugewandter Stirnwände (12, 14) begrenzt ist;
- ein Kopplungselement (16), das einstückig mit einer ersten Stirnwand (12) ausgebildet und dazu ausgelegt ist, den äußeren zylindrischen Körper (10) mit einem Träger zu verbinden;
- einen Kolben (18), der gleitend im Inneren des äußeren zylindrischen Körpers (10) gelagert ist und eine Stange (19) aufweist, die innerhalb einer durch eine zweite Stirnwand (14) verlaufende Durchgangsöffnung verschiebbar ist, wobei der Kolben (18) drehbar verschiebbar ist zwischen einer ersten eingezogenen Position, in der sich die Stange (19) in einer Stellung befindet, die maximal in das Innere des äußeren zylindrischen Körpers (10) eingezogen ist und sich in einer ersten Winkelposition in Bezug auf diesen befindet, und einer zweiten ausgefahrenen Position, in der sich die Stange (19) in einer Stellung befindet, die maximal außerhalb des äußeren zylindrischen Körpers (10) ausgefahren ist und sich in einer zweiten Winkelposition befindet, die in Bezug auf die erste Winkelposition gedreht ist, wobei die Stange (19) ein Verbindungsende (19a) aufweist, das von der zweiten Stirnwand (14) nach außen hervorsteht, wobei das Verbindungsende (19a) dazu ausgelegt ist, ein flexibles Kabel mit der ausziehbaren Spannvorrichtung (9) zu verbinden; und
- eine erste elastische Einrichtung (20), die im Inneren des äußeren zylindrischen Körpers (10) untergebracht ist und dazu ausgelegt ist, den Kolben (18) in Richtung der ersten zurückgezogenen Position vorzuspannen,
**dadurch gekennzeichnet, dass** sie ein ringförmiges Element (26) aufweist, das koaxial zu der Stange (19) des Kolbens (18) ist und radial zwischen der Stange (19) und dem äußeren zylindrischen Körper (18) liegt, wobei die Stange (19) gleitend in dem ringförmigen Element (26) aufgenommen ist, wobei das ringförmige Element (26) auf einer Seite von einem Ende der ersten elastischen Einrichtung (20) in Eingriff genommen ist, wobei das entgegengesetzte Ende der ersten elastischen Einrichtung (20) gegen die zweite Abschlusswand (14) des äußeren zylindrischen Körpers (10) anliegt, und auf der anderen Seite von einem Ende einer zweiten elastischen Einrichtung (28) in Eingriff genommen ist, wobei das entgegengesetzte Ende der zweiten elastischen Einrichtung (28) gegen einen Vorsprung anliegt, der einstückig mit der Stange (19) ausgebildet ist, wobei das ringförmige Element (26) zumindest einen Haken (30) enthält, der einstückig mit dem ringförmigen Element (26) ausgebildet ist und gegen die Wirkung einer zweiten elastischen Einrichtung (32) radial beweglich ist zwischen einem gekoppelten Zustand mit einer entsprechenden Aussparung (33) an der Stange (19), in dem die Stange (19) gegenüber dem ringförmigen Element nicht frei verschiebbar ist, und einem von der Aussparung ( 33) entkoppelten Zustand, in dem die Stange (19) gegenüber dem ringförmigen Element (26) frei verschiebbar ist.

2. Vorrichtung nach Anspruch 1, wobei der äußere zylindrische Körper (10) mindestens einen Sitz (22) aufweist, der sich zwischen zwei in Längsrichtung und in Umfangsrichtung entlang der Außenfläche des äußeren zylindrischen Körpers (10) voneinander beabstandeten Enden erstreckt, wobei die Vorrichtung (9) weiter einen Stift (24) aufweist, der quer aus dem Kolben (18) hervorragt und einstückig mit dem Kolben beweglich ist, wobei der Stift (24) gleitend in dem Sitz (22) untergebracht und verstellbar ist zwischen einer ersten Position in der Nähe eines ersten Endes des Sitzes (22), in der der Kolben (18) in der ersten zurückgezogenen Position ist, und einer zweiten Position distal von dem ersten Ende des Sitzes (22), in der der Kolben (18) in seiner zweiten ausgefahrenen Position ist.

3. Vorrichtung nach Anspruch 2, wobei der Sitz (22) ein Schlitz ist, der durch die Dicke des äußeren zylindrischen Körpers (10), in den der Stift (24) gleitend eingeführt wird, verläuft.

4. Vorrichtung nach Anspruch 2 oder 3, wobei der Sitz (22) stufenförmig gestaltet ist.

5. Vorrichtung nach einem der vorangehenden Ansprüche, wobei die erste elastische Einrichtung (20) eine höhere Steifigkeit aufweist als die zweite elastische Einrichtung (28).

6. Vorrichtung nach einem der vorangehenden Ansprüche, aufweisend eine radiale Unterlegscheibe (34), die gleitend auf der Stange (19) angebracht ist, und zwar in einer axial zwischen der zweiten Abschlusswand (14) des äußeren zylindrischen Körpers (10) und dem ringförmigen Element (26) angeordneten Position, wobei die radiale Unterlegscheibe (34) radiale Verdickungen (34a) aufweist, die zum Ankoppeln des Hakens (30) geeignet sind, um den Haken aus dem angekoppelten Zustand der jeweiligen Aussparung (33) auf der Stange (19) in den entkoppelten Zustand aus der Aussparung (33) zu heben.

## Revendications

1. Dispositif de mise en tension extensible (9), en particulier pour la protection de lignes électriques aériennes, comprenant :
- un corps cylindrique externe (10), étendu le long d'une direction longitudinale (x) et délimité aux extrémités par une paire de parois d'extrémité (12, 14) se faisant face ;
- un élément de couplage (16), solidaire d'une première paroi d'extrémité (12) et adapté pour relier le corps cylindrique externe (10) à un support ;
- un piston (18), logé de manière coulissante à l'intérieur du corps cylindrique externe (10) et comprenant une tige (19) apte à coulisser dans un trou qui traverse une deuxième paroi d'extrémité (14), ledit piston (18) étant apte à être déplacé en translation rotative entre une première position rétractée, dans laquelle la tige (19) est dans une configuration qui est rétractée au maximum à l'intérieur du corps cylindrique externe (10) et dans une première position angulaire par rapport à celui-ci, et une deuxième position étendue, dans laquelle la tige (19) est dans une configuration qui est étendue au maximum à l'extérieur du corps cylindrique externe (10) et dans une deuxième position angulaire tournée par rapport à la première position angulaire, ladite tige (19) ayant une extrémité de liaison (19a) faisant saillie de manière externe vers la deuxième paroi d'extrémité (14), ladite extrémité de liaison (19a) étant adaptée pour relier un câble flexible au dispositif de mise en tension extensible (9) ; et
- un premier moyen élastique (20), logé à l'intérieur du corps cylindrique externe (10) et adapté pour solliciter le piston (18) vers ladite première position rétractée,
**caractérisé en ce qu'**il comprend un élément annulaire (26) coaxial par rapport à la tige (19) du piston (18) et radialement interposé entre ladite tige (19) et le corps cylindrique externe (10), la tige (19) étant reçue de manière coulissante dans ledit élément annulaire (26), ledit élément annulaire (26) est mis en prise sur un côté par une extrémité du premier moyen élastique (20), l'extrémité opposée dudit premier moyen élastique (20) étant en butée contre la deuxième paroi d'extrémité (14) du corps cylindrique externe (10), et sur l'autre côté par une extrémité d'un deuxième moyen élastique (28), l'extrémité opposée dudit deuxième moyen élastique (28) étant en butée contre une saillie solidaire de la tige (19), ledit élément annulaire (26) logeant au moins un crochet (30), solidaire de l'élément annulaire (26) et radialement mobile, contre l'action d'un moyen élastique secondaire (32), entre un état mis en prise avec un évidement (33) correspondant sur la tige (19), dans lequel la tige (19) n'est pas libre de coulisser par rapport à l'élément annulaire (26), et un état désolidarisé par rapport à l'évidement (33), dans lequel la tige (19) est libre de coulisser par rapport à l'élément annulaire (26).

2. Dispositif selon la revendication 1, dans lequel le corps cylindrique externe (10) possède au moins un siège (22), étendu entre deux extrémités mutuellement espacées de manière longitudinale et circonférentielle le long de la surface externe du corps cylindrique externe (10), ledit dispositif (9) comprenant en outre une goupille (24), faisant saillie de manière transversale par rapport au piston (18) et mobile de manière solidaire audit piston, ladite goupille (24) est logée de manière coulissante dans ledit siège (22) entre une première position proximale à une première extrémité du siège (22), dans laquelle le piston (18) est dans sa première position rétractée, et une deuxième position distale par rapport à ladite première extrémité du siège (22), dans laquelle le piston (18) est dans sa deuxième position étendue.

3. Dispositif selon la revendication 2, dans lequel le siège (22) est une fente qui traverse l'épaisseur du corps cylindrique externe (10), dans laquelle la goupille (24) est insérée de manière coulissante.

4. Dispositif selon la revendication 2 ou 3, dans lequel le siège (22) est façonné selon un profil en escalier.

5. Dispositif selon l'une quelconque des revendications précédentes, dans lequel le premier moyen élastique (20) possède une plus forte rigidité que la rigidité du deuxième moyen élastique (28).

6. Dispositif selon l'une quelconque des revendications précédentes, comprenant une cale radiale (34), emboîtée de manière coulissante sur la tige (19) dans une position axialement interposée entre la deuxième paroi d'extrémité (14) du corps cylindrique externe (10) et l'élément annulaire (26), ladite cale radiale (34) ayant des surépaisseurs radiales (34a) appropriées pour venir en prise avec le crochet (30) pour lever ledit crochet, de l'état mis en prise de l'évidement (33) correspondant sur la tige (19) à l'état désolidarisé par rapport à l'évidement (33).
